# EUROPÄISCHE PATENTSCHRIFT

(11) **EP 2 465 745 B1**
(45) Veröffentlichungstag und Bekanntmachung des Hinweises auf die Patenterteilung: **05.07.2017**
(21) Anmeldenummer: 11192334.8
(22) Anmeldetag: 07.12.2011
(51) Int. Cl.: B61D 49/00, F16P 3/00, H01H 15/00

(54) **Mechanische Betätigungsvorrichtung**
Mechanical operation device
Dispositif d'actionnement mécanique

(30) Priorität: 16.12.2010 DE 102010054724
(43) Veröffentlichungstag der Anmeldung: 20.06.2012
(73) Patentinhaber: KNORR-BREMSE Systeme für Schienenfahrzeuge GmbH, 80809 München (DE)
(72) Erfinder: Knörnschild, Thomas, 81243 München (DE)
(74) Vertreter: Schönmann, Kurt

(56) Entgegenhaltungen:
- DE-A1- 3 023 033
- US-A- 5 724 737
- US-B1- 6 548 776

## Beschreibung

Die Erfindung betrifft eine mechanische Betätigungsvorrichtung, insbesondere für eine Funktionsbaugruppe eines Schienenfahrzeugs, umfassend einen drehbar um eine Drehachse gelagerten Hebel, der zwischen zumindest einer ersten Schaltstellung und einer zweiten Schaltstellung hin und her bewegbar ist, ein mit dem Hebel wirkverbundenes Schaltelement, das zwischen einer ersten Schaltposition und einer zweiten Schaltposition hin und her bewegbar ist, wobei eine Schaltbewegung des Hebels aus der ersten Schaltstellung in die zweite Schaltstellung eine Veränderung der Schaltposition des Schaltelements bewirkt, wobei ein Schalter vorgesehen ist, der zwischen einer ersten Stellung und einer zweiten Stellung hin und her bewegbar ist, und wobei die Bewegung des Hebels aus der ersten Schaltstellung in die zweite Schaltstellung eine Veränderung der Schaltposition des Schaltelementes aus der ersten Schaltposition in die zweite Schaltposition nur dann bewirkt, wenn der Schalter in der ersten Stellung ist.

Eine gattungsgemäße mechanische Betätigungsvorrichtung ist aus der DE 30 23 033 A1 bekannt.

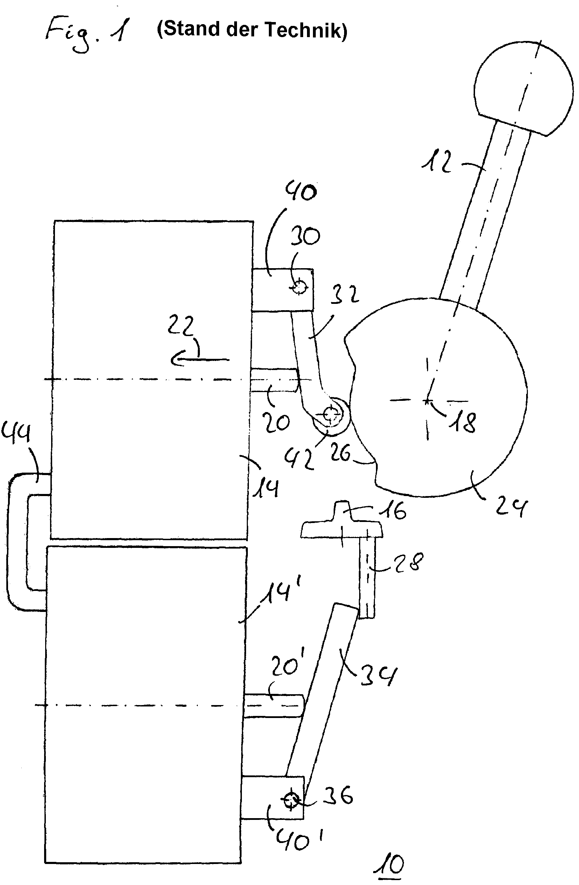

Eine dem Stand der Technik entnommene mechanische Betätigungsvorrichtung ist in der Figur 1 dargestellt. Die mechanische Betätigungsvorrichtung 10 umfasst ein Schaltelement 14 mit einem in einer Betätigungsrichtung 22 bewegbaren Aktor 20. Der Aktor 20 kann beispielsweise ein Ventilstößel sein, der das als Ventil ausgeführte Schaltelement 14 durch Verschieben entlang der Betätigungsrichtung 22 öffnet oder schließt. Die Bewegung des Aktors 20 erfolgt über einen Hebel 12, der starr mit einer ein Nockenprofil 26 aufweisenden Nocke 24 gekoppelt ist. Der Hebel 12 mit der Nocke 24 ist drehbar um eine Drehachse 18 gelagert. Über eine an dem Nockenprofil 26 anliegende Rolle 42 wird die Drehung des Hebels 12 auf einen Betätigungshebel 32 übertragen, wobei der Betätigungshebel 32 gegenüber dem Schaltelement 14 durch eine Fixierung 40 festgelegt ist und um eine weitere Drehachse 30 drehbar gelagert ist. Bei der Drehung des Hebels 12 um die Drehachse 18 wird aufgrund des Nockenprofils 26 der Betätigungshebel 32 um die weitere Drehachse 30 gedreht, so dass der Aktor 20 von dem Betätigungshebel entlang der Betätigungsrichtung 22 verschoben wird. Das Nockenprofil 26 weist in seinem oberen Bereich und in seinem unteren Bereich jeweils Einkerbungen auf, die mit einer ersten Schaltstellung des Hebels und mit einer zweiten Schaltstellung des Hebels korrespondieren. Das Schaltelement 14 ist über eine Kopplung 44 mit einem weiteren Schaltelement 14' gekoppelt. Das weitere Schaltelement 14' umfasst einen weiteren Aktor 20', der genau wie der Aktor 20 des Schaltelementes 14 entlang der Betätigungsrichtung 22 zum Öffnen und Schließen des weiteren Schaltelementes 14' bewegbar ist. Das weitere Schaltelement 14' kann als ein Ventil ausgeführt sein, das durch den als Ventilstößel ausgeführten weiteren Aktors 20' geöffnet und geschlossen werden kann. Die Kopplung 44 zwischen dem Schaltelement 14 und dem weiteren Schaltelement 14' kann insbesondere eine Verrohrung umfassen, wobei beispielsweise ein Ausgang des Schaltelementes 14 mit einem Eingang des weiteren Schaltelementes 14' gekoppelt ist. Die Betätigung des weiteren Aktor 20' erfolgt über einen weiteren Hebelarm 34, der drehbar um eine zusätzliche Drehachse 36 mithilfe einer weiteren Fixierung 40' gegenüber dem weiteren Schaltelement 14' festgelegt ist. Der weitere Hebelarm wird durch das Betätigen eines mit einem Betätiger 28 verbundenen Schalters 16 um die zusätzliche Drehachse 36 gedreht, wobei der weitere Aktor 20' entlang der Betätigungsrichtung 22 mitbewegt wird und das weitere Schaltelement 14' öffnet oder schließt.

Sowohl das Schaltelement 14 als auch das weitere Schaltelement 14' können beispielsweise 2/2-Wegeventile darstellen, wobei der Ausgang des Schaltelementes 14 mit dem Eingang des weiteren Schaltelementes 14' durch die Kopplung 44 verbunden ist. Dementsprechend weisen sowohl das Schaltelement 14 als auch das weitere Schaltelement 14' jeweils eine erste Schaltposition und eine zweite Schaltposition auf. In der ersten Schaltposition sind das Schaltelement 14 und das weitere Schaltelement 14' in ihrer jeweiligen Sperrstellung und in der zweiten Schaltposition in ihrer jeweiligen Durchlassstellung. Die mechanische Betätigungsvorrichtung 10 ist dementsprechend insgesamt in seiner Durchlassstellung, wenn sowohl das Schaltelement 14 als auch das weitere Schaltelement 14' in ihren jeweiligen Durchlassstellungen, das heißt in ihren jeweiligen zweiten Schaltpositionen, sind. Um dies zu erreichen, muss der Hebel 12 in der zweiten Schaltstellung sein, während der Schalter 16 in der zweiten Stellung ist. Die mechanische Betätigungsvorrichtung 10 stellt daher insgesamt eine schaltbare Betätigungsvorrichtung in Form eines schaltbaren Betätigungshebels bereit. Durch die mechanische Betätigungsvorrichtung 10 kann eine nicht dargestellte an einem ebenfalls nicht dargestellten Ausgangsanschluss angeschlossene Funktionsbaugruppe, zum Beispiel ein druckmediumbetriebener Türöffner, gesteuert werden, wobei als Druckmedium beispielsweise Druckluft verwendet werden kann.

Hiervon ausgehend stellt die vorliegende Erfindung eine mechanische Betätigungsvorrichtung bereit, die bei identischem Funktionsumfang weniger Raum beansprucht und gleichzeitig einfacher aufgebaut ist.

Der vorliegenden Erfindung liegt die Aufgabe zugrunde, eine mechanische Betätigungseinrichtung bereitzustellen, bei der die Betätigung mit einer Hand durch das voneinander zeitlich unabhängige Betätigen von Hebel und Schalter möglich ist.

Diese Aufgabe wird erfindungsgemäß mit den Merkmalen des unabhängigen Anspruchs gelöst.

Vorteilhafte Ausführungsformen und Weiterbildungen der Erfindung sind in den abhängigen Ansprüchen angegeben.

Bei der vorliegenden Erfindung ist ein Schalter vorgesehen, der zwischen einer ersten Stellung und einer zweiten Stellung hin und her bewegbar ist, wobei die Bewegung des Hebels aus der ersten Schaltstellung in die zweite Schaltstellung eine Veränderung der Schaltposition des Schaltelementes aus der ersten Schaltposition in die zweite Schaltposition nur dann bewirkt, wenn der Schalter in der ersten Stellung ist. Auf diese Weise kann das weitere Schaltelement mit dem weiteren Aktor vollständig eingespart werden, ohne dass hierdurch Einbußen hinsichtlich der Funktionalität der Gesamtvorrichtung auftreten. Insgesamt ergibt sich ein einfacherer mechanischer Aufbau der Betätigungseinrichtung. Hierdurch wird sowohl eine Reduzierung der Baugröße als auch eine Reduzierung der Baukosten der Betätigungsvorrichtung erreicht. Weiterhin wird die Gefahr von Undichtigkeiten reduziert, da die Kopplung zwischen den getrennten Schaltelementen entfallen kann, weshalb weniger Dichtstellen vorliegen.

Bei der vorliegenden Erfindung ist der Hebel drehbar um eine Drehachse gelagert ist. Eine drehbare Lagerung des Hebels erlaubt eine bequeme Betätigung des Hebels. Anstelle einer Drehbewegung kann jedoch auch eine Verschiebung des Hebels vorgesehen sein.

Es kann auch vorgesehen sein, dass ein Aktor des Schaltelementes in einer Betätigungsrichtung bewegt wird, um das Schaltelement von der ersten Schaltposition in die zweite Schaltposition zu überführen. Ein axiales Verschieben des Aktors stellt eine einfache Möglichkeit zur Betätigung des Schaltelementes dar.

Erfindungsgemäß ist vorgesehen, dass eine Nocke mit einem Nockenprofil starr oder über ein Getriebe mit dem Hebel gekoppelt und drehbar um die Drehachse gelagert ist. Mithilfe des Nockenprofils der Nocke wird die Drehbewegung des Hebels zwischen seiner ersten Schaltstellung und seiner zweiten Schaltstellung in eine resultierende Bewegung eines das Nockenprofil abtastenden Bauteils umgesetzt.

Vorteilhafterweise kann auch vorgesehen sein, dass der Schalter einen durch das Betätigen des Schalters bewegbaren Betätiger umfasst, und dass durch das Bewegen des Betätigers eine weitere Drehachse eines Betätigungshebels relativ zum Schaltelement verlagert wird. Auch auf diese Weise können weitere bewegliche Teile vollständig eingespart werden.

Weiterhin ist es möglich, dass ein weiterer Hebelarm vorgesehen ist, der an der weiteren Drehachse mit dem Betätigungshebel drehbar gekoppelt ist, und dass der weitere Hebelarm gegenüber dem Schaltelement an einer zusätzlichen Drehachse drehbar festgelegt ist. Auf diese Weise kann die Komplexität der Betätigungsvorrichtung im Bereich des Schalters und der Drehachsen gering gehalten werden.

Es ist auch denkbar, dass eine Feder vorgesehen ist, die die weitere Drehachse gegen den Betätiger presst. Auf diese Weise kann der Bedienkomfort der Betätigungseinrichtung erhöht werden, da sich die Schaltelemente immer in einer definierten Schaltstellung befinden, so dass die beim Betätigen des Hebels beziehungsweise des Schalters notwendigen Bedienkräfte gleichmäßig verlaufen, wodurch der gefühlte Schaltkomfort erhöht wird.

Die Erfindung wird nun mit Bezug auf die begleitenden Zeichnungen anhand besonders bevorzugter Ausführungsformen beispielhaft erläutert.

Es zeigen:
- Figur 1: Eine mechanische Betätigungsvorrichtung gemäß dem Stand der Technik;
- Figur 2: eine Ausführungsform einer erfindungsgemäßen mechanischen Betätigungsvorrichtung in einer ersten Stellung; und
- Figur 3: eine Ausführungsform einer erfindungsgemäßen mechanischen Betätigungsvorrichtung in einer zweiten Position.

In den folgenden Zeichnungen bezeichnen gleiche Bezugszeichen gleiche oder gleichartige Teile.

Figur 1 zeigt eine mechanische Betätigungsvorrichtung gemäß dem Stand der Technik, die bereits in der Einleitung beschrieben wurde.

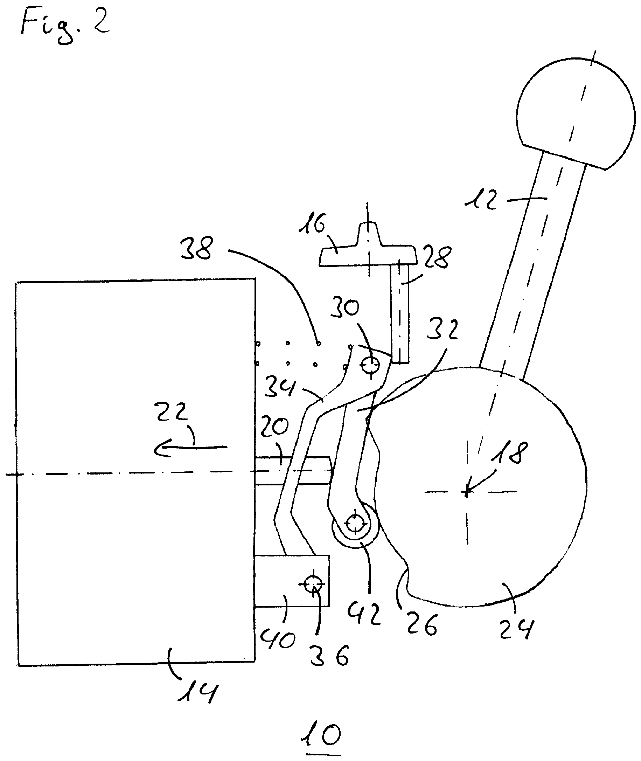

Figur 2 zeigt eine erfindungsgemäße mechanische Betätigungsvorrichtung in einer ersten Position. Die dargestellte mechanische Betätigungsvorrichtung 10 umfasst als Betätigungselemente einen Hebel 12 und einen Schalter 16. Der Hebel 12 und der Schalter 16 wirken gemeinsam auf einen Aktor 20 ein, der in einer Betätigungsrichtung 22 verschiebbar ist. Der Aktor 20 kann insbesondere ein Ventilstößel eines als Ventil ausgeführten Schaltelementes 14 sein. Das Schaltelement 14 kann insbesondere als ein einfaches 2/2-Wegeventil ausgeführt sein, das durch den Aktor 20 zwischen seiner offenen und seiner geschlossenen Stellung geschaltet werden kann. Eine erste Schaltposition des Schaltelementes 14 beziehungsweise des Aktors 20 entspricht dabei der geschlossenen Stellung des Schaltelementes 14 während eine zweite Schaltposition des Schaltelementes 14 beziehungsweise des Aktors 20 einer offenen Stellung des Schaltelementes 14 entspricht. In der ersten Schaltposition des Schaltelementes 14 ist ein in der Figur 2 nicht dargestellter Eingangsanschluss des Schaltelementes 14 von einem ebenfalls nicht dargestellten Ausgangsanschluss des Schaltelementes 14 getrennt. In der zweiten Schaltposition des Schaltelementes 14 ist der nicht dargestellte Eingangsanschluss dagegen mit dem nicht dargestellten Ausgangsanschluss verbunden, so dass ein am Eingangsanschluss anstehendes Medium, zum Beispiel Druckluft, durch das Schaltelement 14 hindurch treten kann. Auf diese Weise kann die mechanische Betätigungsvorrichtung eine nicht dargestellte an den Ausgangsanschluss angeschlossene Funktionsbaugruppe ansteuern/betätigen.

Ein Hebel 12 ist wie bei der aus Figur 1 bekannten Ausführungsform starr mit einer Nocke 24, die ein Nockenprofil 26 aufweist, gekoppelt und drehbar um eine Drehachse 18 gelagert. In einer nicht geneigten alternativen Ausführungsform kann der Hebel 12 über ein Getriebe mit der Nocke 24 gekoppelt sein. Bei der Drehung des Hebels 12 wird das Nockenprofil 26 von einer an der Nocke 24 anliegenden Rolle 42 abgetastet, die das Nockenprofil 26 in eine entsprechende Bewegung eines Betätigungshebels 32 umsetzt. Das Nockenprofil 26 weist dabei zwei Einkerbungen auf, die mit der ersten Schaltstellung und der zweiten Schaltstellung des Hebels 12 korrelieren. Der Hebelarm des Betätigungshebels 32 liegt gleitend an dem Aktor 20 an, so dass eine Rotation des Hebelarms um eine weitere Drehachse 30 zu einer Verschiebung des Aktors 20 in eine Betätigungsrichtung 22 führen kann. Zu diesem Zweck ist das von der Rolle 42 abgewandte Ende des Betätigungshebels 32 drehbar um die weitere Drehachse 30 gelagert. Weiterhin ist ein weiterer Hebelarm 34 ebenfalls drehbar mit der weiteren Drehachse 30 gekoppelt und gleichzeitig drehbar mit der zusätzlichen Drehachse 36 verbunden, die über eine Fixierung 40 gegenüber dem Schaltelement 14 festgelegt ist. Der Schalter 16, der starr mit einem Betätiger 28 verbunden ist, ist dazu geeignet, die weitere Drehachse 30 im Wesentlichen in der Betätigungsrichtung 22 entgegen einer durch eine Feder 38 aufgebrachten Federkraft zu verschieben. Zu diesem Zweck kann der Betätiger 28 direkt an der weiteren Drehachse 30, dem Betätigungshebel 32 oder dem weiteren Hebelarm 34 anliegen. Es ist allerdings auch denkbar, dass der Betätiger 28 direkt mit der weiteren Drehachse 30 gekoppelt ist und diese fixiert. In diesem Fall kann auf die Feder 38 und/oder den weiteren Hebelarm 34 verzichtet werden, um die mechanische Betätigungsvorrichtung 10 weiter zu vereinfachen. Die Feder 38 kann, wie in Figur 2 dargestellt, als Spiralfeder ausgeführt sein. Es ist allerdings auch denkbar, dass die Feder 38 als Torsionsfeder an der zusätzlichen Drehachse 36 angreift und von dort den weiteren Hebelarm 34 gegen den Betätiger 28 presst.

Bei der in Figur 2 dargestellten Ausführungsform der mechanischen Betätigungseinrichtung 10 befindet sich der Schalter 16 in seiner ersten Position, so dass die weitere Drehachse 30 in der Betätigungsrichtung 22 weit von dem Schaltelement 14 entfernt liegt. Aufgrund dieses großen Abstandes der weiteren Drehachse 30 ist die auf den Aktor 20 durch den Betätigungshebel 32 und das Nockenprofil 26 übertragene Verschiebung in der Betätigungsrichtung 22 beim Drehen des Hebels 12 von der ersten Schaltstellung in die zweite Schaltstellung nicht ausreichend, um das Schaltelement 14 aus seinem geschlossenen Zustand in seinen geöffneten Zustand zu überführen. Es ist sogar denkbar, dass der Betätigungshebel 32 vollständig von dem Aktor 20 abgehoben ist, wenn der Hebel in der ersten Schaltstellung ist. Um in diesem Fall eine definierte Position der verschiedenen mechanischen Bestandteile der Betätigungsvorrichtung 10 sicher zu stellen, kann eine nicht dargestellte Torsionsfeder an der weiteren Drehachse 30 vorgesehen sein, die den Betätigungshebel 32 gegen das Nockenprofil 26 drückt.

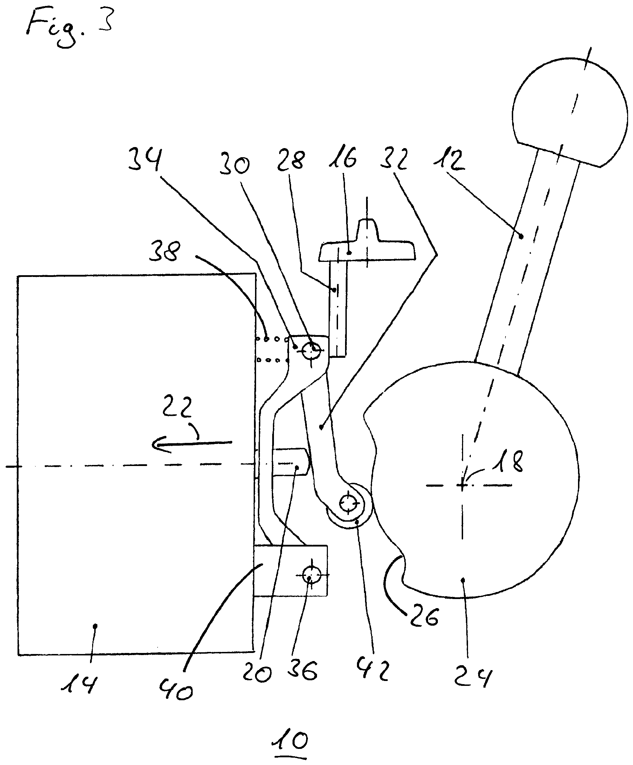

Figur 3 zeigt eine erfindungsgemäße mechanische Betätigungsvorrichtung in einer zweiten Position. Die in Figur 3 dargestellte mechanische Betätigungsvorrichtung 10 entspricht der aus Figur 2 bereits bekannten mechanischen Betätigungsvorrichtung 10, wobei allerdings der Schalter 16 in der zweiten Position dargestellt ist. Dementsprechend ist die weitere Drehachse 30 unter Einwirkung des Betätigers 28 gegenüber der Darstellung aus Figur 2 näher an dem Schaltelement 14 gelegen, so dass der Aktor 20 beim Betätigen des Hebels 12 von der ersten Schaltstellung in die zweite Schaltstellung das Schaltelement 14 aus dem geschlossenen Zustand in den geöffneten Zustand überführt.

Zur Vereinfachung der in den Figuren 2 und 3 dargestellten mechanischen Betätigungsvorrichtung 10 kann in einer nicht beanspruchten Ausgestaltung vorgesehen sein, dass das Nockenprofil 26 direkt an den Aktor 20 angreift, wobei dann der Betätigungshebel 32 und ein eventuell vorhandener weiter Hebelarm 34 entfallen kann. In diesem Fall ist das Nockenprofil 26 entsprechend anzupassen, das heißt es sollte von einer Einkerbung zu einer Erhöhung verlaufen, wobei die Einkerbung mit der ersten Schaltstellung des Hebels korreliert und die Erhöhung mit der zweiten Schaltstellung des Hebels korreliert. Um die Funktionalität der mechanischen Betätigungsvorrichtung 10 insgesamt zu erhalten, sollte bei dieser nicht beanspruchten Ausgestaltung weiterhin der Schalter 16 geeignet sein, die Drehachse 18 in Betätigungsrichtung 22 gegenüber dem Schaltelement 14 zu verschieben. Zu diesem Zweck kann beispielsweise der Betätiger 28 an der Drehachse 18 angreifen oder zur Fixierung fest mit dieser verbunden sein. Alternativ ist auch denkbar, dass das Schaltelement 14 durch Betätigen des Schalters 16 mithilfe des Betätigers 28 gegenüber der Drehachse 18 verschiebbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: mechanische Betätigungsvorrichtung
- 12: Hebel
- 14: Schaltelement
- 14': weiteres Schaltelement
- 16: Schalter
- 18: Drehachse
- 20: Aktor
- 20': weiterer Aktor
- 22: Betätigungsrichtung
- 24: Nocke
- 26: Nockenprofil
- 28: Betätiger
- 30: weitere Drehachse
- 32: Betätigungshebel
- 34: weiterer Hebelarm
- 36: zusätzliche Drehachse
- 38: Feder
- 40: Fixierung
- 40': weitere Fixierung
- 42: Rolle
- 44: Kopplung

## Patentansprüche

1. Mechanische Betätigungsvorrichtung (10), insbesondere für eine Funktionsbaugruppe eines Schienenfahrzeugs, umfassend
- einen drehbar um eine Drehachse (18) gelagerten Hebel (12), der zwischen zumindest einer ersten Schaltstellung und einer zweiten Schaltstellung hin und her bewegbar ist,
- ein mit dem Hebel (12) wirkverbundenes Schaltelement (14), das zwischen einer ersten Schaltposition und einer zweiten Schaltposition hin und her bewegbar ist,
- wobei eine Schaltbewegung des Hebels (12) aus der ersten Schaltstellung in die zweite Schaltstellung eine Veränderung der Schaltposition des Schaltelements (14) bewirkt,
- wobei ein Schalter (16) vorgesehen ist, der zwischen einer ersten Stellung und einer zweiten Stellung hin und her bewegbar ist, und
- wobei die Bewegung des Hebels (12) aus der ersten Schaltstellung in die zweite Schaltstellung eine Veränderung der Schaltposition des Schaltelementes (14) aus der ersten Schaltposition in die zweite Schaltposition nur dann bewirkt, wenn der Schalter (16) in der ersten Stellung ist,
**dadurch gekennzeichnet,**
- **dass** eine Nocke (24) mit einem Nockenprofil (26) starr oder über ein Getriebe mit dem Hebel (12) gekoppelt und drehbar um die Drehachse (18) gelagert ist,
- wobei die Bewegung des Hebels (12) um die Drehachse (18) zwischen der ersten Schaltstellung und der zweiten Schaltstellung in eine Bewegung eines das Nockenprofil (26) abtastenden Bauteils umgesetzt wird, und
- **dass** das Nockenprofil (26) zwei Einkerbungen aufweist, die mit der ersten Schaltstellung und der zweiten Schaltstellung des Hebels (12) korrelieren.

2. Mechanische Betätigungsvorrichtung (10) nach Anspruch 1, **dadurch gekennzeichnet, dass** ein Aktor (20) des Schaltelementes (14) in einer Betätigungsrichtung (22) bewegt wird, um das Schaltelement (14) von der ersten Schaltposition in die zweite Schaltposition zu überführen.

3. Mechanische Betätigungsvorrichtung (10) nach Anspruch 1 oder 2, **dadurch gekennzeichnet,**
- **dass** der Schalter (16) einen durch das Betätigen des Schalters (16) bewegbaren Betätiger (28) umfasst, und
- **dass** durch das Bewegen des Betätigers (28) eine weitere Drehachse (30) eines Betätigungshebels (32) relativ zum Schaltelement (14) verlagert wird.

4. Mechanische Betätigungsvorrichtung (10) nach Anspruch 3, **dadurch gekennzeichnet,**
- **dass** ein weiterer Hebelarm (34) vorgesehen ist, der an der weiteren Drehachse (30) mit dem Betätigungshebel (32) drehbar gekoppelt ist, und
- **dass** der weitere Hebelarm (34) gegenüber dem Schaltelement (14) an einer zusätzlichen Drehachse (36) drehbar festgelegt ist.

5. Mechanische Betätigungsvorrichtung (10) nach Anspruch 3 oder 4, **dadurch gekennzeichnet, dass** eine Feder (38) vorgesehen ist, die die weitere Drehachse (30) gegen den Betätiger (28) presst.

## Claims

1. Mechanical actuating apparatus (10), in particular for a functional module of a rail vehicle, comprising
- a lever (12) which is mounted rotatably about a rotational pivot (18) and can be moved to and fro between at least a first switching position and a second switching position,
- a switching element (14) which is operatively connected to the lever (12) and can be moved to and fro between a first switching position and a second switching position,
- a switching movement of the lever (12) from the first switching position into the second switching position bringing about a change in the switching position of the switching element (14),
- a switch (16) being provided which can be moved to and fro between a first position and a second position, and
- the movement of the lever (12) from the first switching position into the second switching position bringing about a change in the switching position of the switching element (14) from the first switching position into the second switching position only when the switch (16) is in the first position,
**characterized**
- **in that** a cam (24) with a cam profile (26) is coupled to the lever (12) rigidly or via a gear mechanism and is mounted rotatably about the rotational pivot (18),
- the movement of the lever (12) about the rotational pivot (18) between the first switching position and the second switching position being converted into a movement of a component which senses the cam profile (26), and
- **in that** the cam profile (26) has two notches which correlate with the first switching position and the second switching position of the lever (12).

2. Mechanical actuating apparatus (10) according to Claim 1, **characterized in that** an actuator (20) of the switching element (14) is moved in an actuating direction (22), in order to transfer the switching element (14) from the first switching position into the second switching position.

3. Mechanical actuating apparatus (10) according to Claim 1 or 2, **characterized**
- **in that** the switch (16) comprises an actuator (28) which can be moved by way of the actuation of the switch (16), and
- **in that** a further rotational pivot (30) of an actuating lever (32) is moved relative to the switching element (14) by way of the movement of the actuator (28).

4. Mechanical actuating apparatus (10) according to Claim 3, **characterized**
- **in that** a further lever arm (34) is provided which is coupled rotatably to the actuating lever (32) on the further rotational pivot (30), and
- **in that** the further lever arm (34) is fixed such that it can be rotated with respect to the switching element (14) on an additional rotational pivot (36).

5. Mechanical actuating apparatus (10) according to Claim 3 or 4, **characterized in that** a spring (38) is provided which presses the further rotational pivot (30) against the actuator (28).

## Revendications

1. Dispositif (10) mécanique d'actionnement, notamment pour un module d'un véhicule ferroviaire, comprenant
- un levier (12), qui est monté pivotant autour d'un axe (18) de pivotement et qui peut aller et venir entre au moins une première position de manoeuvre et une deuxième position de manoeuvre,
- un élément (14) de manoeuvre, qui coopère avec le levier (12) et qui peut aller et venir entre une première position de manoeuvre et une deuxième position de manoeuvre,
- dans lequel un passage du levier (12), de la première position de manoeuvre à la deuxième position de manoeuvre, provoque une modification de la position de manoeuvre de l'élément (14) de manoeuvre,
- dans lequel il est prévu un interrupteur (16), qui peut aller et venir entre une première position et une deuxième position et
- dans lequel le passage du levier (12), de la première position de manoeuvre à la deuxième position de manoeuvre, ne provoque une modification de la position de manoeuvre de l'élément (14) de manoeuvre, de la première position de manoeuvre à la deuxième position de manoeuvre, que si l'interrupteur (16) est dans la première position,
**caractérisé**
- **en ce qu'**une came (24), ayant un profil (26), est couplée rigidement ou par une transmission au levier (12) et est montée tournante autour de l'axe (18) de pivotement,
- dans lequel le mouvement du levier (12), autour de l'axe (18) de pivotement, entre la première position de manoeuvre et la deuxième position de manoeuvre, est transformé en un déplacement d'une pièce balayant le profil (26) de la came et
- **en ce que** le profil (26) de la came a deux encoches, qui sont en corrélation avec la première position de manoeuvre et la deuxième position de manoeuvre du levier (12).

2. Dispositif (10) mécanique d'actionnement suivant la revendication 1, **caractérisé en ce qu'**un actionneur (20) de l'élément (14) de commutation est déplacé dans un sens (22) d'actionnement, pour faire passer l'élément (14) de manoeuvre, de la première position de manoeuvre à la deuxième position de manoeuvre.

3. Dispositif (10) suivant la revendication 1 ou 2, **caractérisé**
- **en ce que** l'interrupteur (16) comprend un actionneur (28) pouvant être déplacé par l'actionnement de l'interrupteur (16) et
- **en ce que**, par le déplacement de l'actionneur (28), un autre axe (30) de pivotement d'un levier (32) d'actionnement est déplacé par rapport à l'élément (14) de manoeuvre.

4. Dispositif (10) suivant la revendication 3, **caractérisé**
- **en ce qu'**il est prévu un autre bras (34) de levier, qui est couplé en pivotement au levier (32) d'actionnement, sur l'autre axe (30) de pivotement et
- **en ce que** l'autre bras (34) de levier est fixé, avec possibilité de tourner, par rapport à l'élément (14) de manoeuvre, à un axe (36) de pivotement supplémentaire.

5. Dispositif (10) suivant la revendication 3 ou 4, **caractérisé en ce qu'**il est prévu un ressort (38), qui pousse l'autre axe (30) de pivotement sur l'actionneur (28).
